# FASCICULE DE BREVET EUROPEEN

(11) **EP 1 512 585 B1**
(45) Date de publication et mention de la délivrance du brevet: **21.06.2006**
(21) Numéro de dépôt: 04292114.8
(22) Date de dépôt: 01.09.2004
(51) Int. Cl.: B60R 19/18

(54) **Ensemble d'une poutre d'absorption d'energie et d'un plancher de vehicule automobile**
Anordnung aus einem energieabsorbierenden Träger und einem Boden eines Kraftfahrzeugs
Arrangement of an energy-absorbing beam and a floor of a motor vehicle

(30) Priorité: 05.09.2003 FR 0310532
(43) Date de publication de la demande: 09.03.2005
(73) Titulaire: COMPAGNIE PLASTIC OMNIUM, 69007 Lyon (FR)
(72) Inventeur: Roussel, Thierry, 52500 Fayl La Foret (FR); Malteste, Stephane, 01800 Meximieux (FR)
(74) Mandataire: Remy, Vincent Noel Paul

(56) Documents cités:
- EP-A- 1 190 915
- US-A- 3 933 387
- US-A- 4 186 915

## Description

La présente invention concerne un ensemble d'une poutre d'absorption d'énergie et d'un plancher de véhicule automobile selon le préamblule de la revendication 1. Un tel ensemble est décrit dans le document EP-A-1190915.

En matière de chocs, les constructeurs automobiles s'imposent un cahier des charges qui envisage trois catégories d'impacts, à savoir : les chocs à haute vitesse qui correspondent à un impact frontal du véhicule contre un obstacle rigide ou déformable à une vitesse de 56 à 64 km/h, les chocs « assurances » tels que celui connu sous le nom de « Danner », à 15 km/h contre un mur fixe, et les petits chocs, ou chocs « parking » à une vitesse comprise entre 4 et 8 km/h, comme celui défini par la norme ECE R42. Les chocs à haute vitesse sont traités avec un objectif de protection des occupants du véhicule, tandis que les chocs « assurances » et « parking », c'est-à-dire les « petits chocs », correspondent plutôt à un objectif de réduction des coûts de réparation.

Les chocs « parkings » et les chocs « assurances » sont traités par des absorbeurs placés entre la peau du pare-chocs et la poutre du véhicule, qui est généralement une traverse métallique, l'inertie de cette traverse étant notamment utile pour les chocs « parking ».

Il peut être avantageux, notamment d'un point de vue économique, de supprimer la traverse métallique en intégrant sa fonction d'inertie à un système d'absorption.

Dans cette optique, on connaît une poutre en matière plastique ayant une rigidité suffisante pour éviter le recours à un appui rigide du type traverse métallique.

Mais une telle poutre pose une difficulté car elle doit présenter une grande section dans la direction prévue pour un choc, faute de quoi son inertie serait insuffisante.

Son encombrement statique est donc important.

En outre, la nécessité de prévoir un espace vide entre la poutre d'absorption et la paroi verticale arrière, afin de permettre une course de recul pour la poutre lors des chocs « assurances », oblige à tenir compte d'un encombrement non pas statique mais dynamique de la poutre (encombrement correspondant au volume total occupé par la poutre pendant son mouvement de recul) qui empêche l'utilisation d'une telle poutre sur certains véhicules, trop courts pour pouvoir consacrer à la poutre un volume égal à cet encombrement dynamique.

En particulier, ce problème se pose à l'arrière des véhicules, où le volume du compartiment à bagages devrait être excessivement réduit s'il fallait laisser toute la place requise par une poutre présentant une importante section dans la direction longitudinale.

L'invention a notamment pour but de fournir une poutre d'absorption d'énergie possédant une inertie suffisante et ne présentant pas un encombrement dynamique trop important.

A cet effet, l'invention a pour objet un ensemble d'une poutre d'absorption d'énergie et d'un plancher de véhicule automobile, la poutre étant destinée à travailler suivant une direction prédéterminée, et présentant une section transversale comportant une excroissance dans la direction prédéterminée, **caractérisé en ce que** la poutre est agencée de manière à ce que son excroissance est susceptible de se déplacer sous le plancher lors d'un choc, lorsque l'ensemble est monté sur le véhicule automobile.

La partie de la poutre formant excroissance, dont le rôle est d'assurer une partie significative de l'inertie de la poutre dans la direction prédéterminée, peut s'engager sous le véhicule lors du choc alors que l'autre partie de la poutre, dite seconde partie, demeure à l'arrière du véhicule et présente une surface suffisamment grande pour assurer sa fonction de protection. La seconde partie de la poutre est de plus susceptible de couvrir un maximum de hauteur, par exemple jusqu'à l'ouvrant arrière dans le cas où la poutre est agencée à l'arrière du véhicule.

La poutre d'absorption est en général agencée de telle manière à laisser un espace entre la seconde partie de la poutre et une partie verticale liée au plancher, par exemple la paroi verticale arrière délimitant le compartiment à bagages du véhicule. Cet espace vide permet une course de la poutre, nécessaire pour les chocs « assurances », et la course de la partie formant excroissance a lieu sous le véhicule afin que l'encombrement dynamique de la poutre n'impose pas de réduire le volume du compartiment à bagages.

En général, la poutre d'absorption selon l'invention est constituée uniquement de matière plastique, ce qui la rend plus légère, et plus économique à réaliser.

Un ensemble selon l'invention peut en outre comporter l'une ou plusieurs des caractéristiques suivantes :
- l'excroissance de la poutre confère à cette poutre plus du tiers de son inertie dans la direction prédéterminée ;
- la longueur de l'excroissance dans la direction prédéterminée est supérieure à la longueur d'une seconde partie de la poutre dans la direction prédéterminée ;
- la poutre présente une section transversale en L ;
- l'absorption est assurée par un réseau de nervures agencé sur la poutre ;
- la poutre est constituée par plusieurs parties rapportées ;
- des absorbeurs locaux sont incorporés à la poutre, au niveau des longerons du véhicule lorsque la poutre est montée sur le véhicule ;
- l'ensemble est destiné à être agencé à l'arrière du véhicule.

L'invention sera mieux comprise à la lecture de la description qui va suivre, donnée uniquement à titre d'exemple et faite en se référant aux dessins annexés dans lesquels :
- la figure 1 est une vue schématique de l'arrière d'un véhicule sur lequel est agencée une poutre d'absorption selon l'invention ;
- les figures 2 et 3 sont des vues en coupe de deux poutres selon deux modes de réalisation de l'invention.

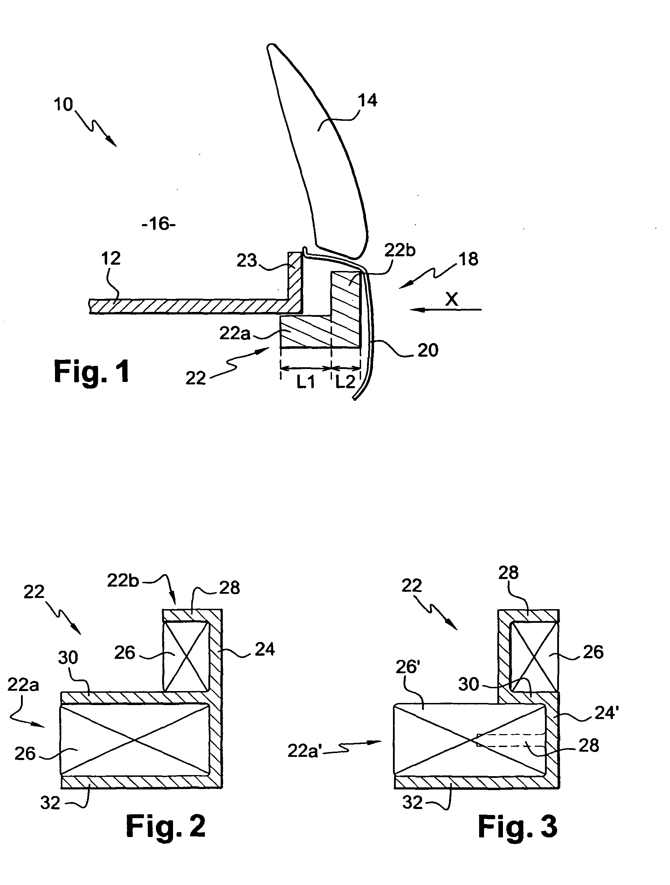

La figure 1 représente schématiquement l'arrière 10 d'un véhicule automobile. Sont ainsi représentés un plancher 12 et un ouvrant arrière, désigné ici hayon 14, délimitant ensemble un compartiment à bagages 16 du véhicule.

L'arrière 10 du véhicule comporte en outre un pare-chocs 18, comportant une peau de pare-chocs 20 ainsi qu'une poutre d'absorption d'énergie 22.

Cette poutre 22 présente une section transversale comportant une excroissance 22a dans une direction X prédéterminée dans laquelle est destinée à travailler la poutre. Cette excroissance correspond à une première partie de la poutre conférant à ladite poutre 22 plus du tiers de son inertie dans la direction X prédéterminée.

En général, la longueur L1 de l'excroissance 22a dans la direction X prédéterminée est supérieure à la longueur L2 d'une seconde partie 22b de la poutre dans la direction X prédéterminée.

Dans le mode de réalisation décrit, la poutre a une section transversale en L. Elle est disposée de manière à avoir une grande inertie dans la direction prévue d'un choc éventuel, c'est à dire la direction X.

Cette inertie est pour plus du tiers assurée par la partie 22a formant excroissance, cette partie 22a formant excroissance ayant une longueur suffisante dans la direction X pour pouvoir assurer une grande inertie.

Cette inertie résulte de la présence de toiles 28, 30, 32 horizontales (en position d'utilisation de la poutre), ces toiles étant maintenues parallèles entre elles par des nervures 26.

Dans la seconde partie 22b, la toile 28, de longueur L2 dans la direction X, contribue moins à l'inertie de la poutre que les toiles 30 et 32, de longueur L1+L2 dans cette même direction X.

Globalement, la relativement grande longueur des toiles 30 et 32 compense la relativement faible longueur de la toile 28.

La poutre 22 est ainsi susceptible de traiter les chocs parking dans la direction X.

L'excroissance 22a occupe une faible hauteur tandis que la seconde partie 22b est agencée de telle manière qu'elle couvre une grande hauteur.

Ainsi la poutre 22 est agencée sur le véhicule de telle manière à ce que sa seconde partie 22b remonte presque jusqu'au hayon 14 et laisse un espace vide entre cette seconde partie 22b et une partie verticale 23 du véhicule, l'excroissance 22a se trouvant plus bas que le plancher 12.

Cet agencement permet une course de la poutre 22, nécessaire au traitement des chocs « assurances ».

Ainsi, la course de la première partie 22a formant excroissance a lieu sous le plancher 12 et celle de la seconde partie utilise l'espace vide laissé derrière la partie verticale 23 du véhicule, ce qui lui permet d'occuper toute la hauteur de la peau de pare-chocs 20 et de présenter une grande surface d'absorption pour les chocs.

Les chocs « assurances » sont éventuellement traités de plus par incorporation à la poutre 22 d'absorbeurs locaux, au niveau des longerons du véhicule lorsque la poutre 22 est montée sur le véhicule.

La poutre 22 est donc susceptible de traiter les chocs « assurances » en plus des chocs parking.

En général, l'absorption des chocs est assurée par les nervures 26 disposées en un réseau. Ces nervures remplissent donc deux fonctions à savoir d'une part le maintien des toiles horizontales pour la conservation de l'inertie et d'autre part la constitution d'un réseau pour l'absorption d'énergie.

Sur la figure 2, la poutre 22 est constituée d'une âme 24 en forme de E, les nervures 26 étant agencées entre les branches du E.

Ces nervures 26, sont agencées par exemple en nid d'abeilles, de manière à assurer une absorption optimale des chocs dans la direction X prédéterminée.

Sur la figure 3, la poutre 22' est constituée d'une âme 24' en forme de S, des nervures 26' étant agencés entre les branches du S.

De manière optionnelle, il est possible d'agencer une toile horizontale 28 sur l'âme 24', située dans la partie 22a' formant excroissance, de manière à augmenter son inertie.

On notera que la poutre d'absorption 22 est généralement constituée de matière plastique, pour des raisons économiques et pour des raisons de facilité de moulage.

Par ailleurs, dans une variante non représentée, il est possible que la poutre 22 soit constituée par plusieurs parties rapportées.

## Revendications

1. Ensemble d'une poutre (22) d'absorption d'énergie et d'un plancher (12) de véhicule automobile, la poutre (22) étant destinée à travailler suivant une direction (X) prédéterminée, et présentant une section transversale comportant une excroissance (22a) dans la direction prédéterminée, **caractérisé en ce que** la poutre (22) est agencée de manière à ce que son excroissance (22a) est susceptible de se déplacer sous le plancher (12) lors d'un choc, lorsque l'ensemble est monté sur le véhicule automobile.

2. Ensemble selon la revendication 1, dans lequel l'excroissance (22a) de la poutre (22) conférant à cette poutre (22) plus du tiers de son inertie dans la direction (X) prédéterminée.

3. Ensemble selon la revendication 1 ou 2, dans lequel la longueur de l'excroissance (22a) de la poutre (22) dans la direction prédéterminée (X) est supérieure à la longueur d'une seconde partie (22b) de la poutre (22) dans la direction (X) prédéterminée.

4. Ensemble selon l'une quelconque des revendications 1 à 3, dans lequel la poutre est agencée de telle manière à laisser un espace entre la seconde partie (22b) de la poutre et une partie verticale (23) liée au plancher (12).

5. Ensemble selon l'une quelconque des revendications précédentes, dans lequel la poutre est constituée uniquement de matière plastique.

6. Ensemble selon l'une quelconque des revendications précédentes, dans lequel la poutre présente une section transversale en L.

7. Ensemble selon l'une quelconque des revendications précédentes, pour laquelle l'absorption est assurée par un réseau de nervures (26) agencé sur la poutre (22).

8. Ensemble selon l'une quelconque des revendications précédentes, dans lequel la poutre est constituée par plusieurs parties rapportées.

9. Ensemble selon l'une quelconque des revendications précédentes, dans laquelle des absorbeurs locaux sont incorporés à la poutre (22), au niveau des longerons du véhicule lorsque la poutre (22) est montée sur le véhicule.

10. Ensemble selon l'une quelconque des revendications précédentes, destiné à être agencé à l'arrière (10) du véhicule.

## Claims

1. An assembly comprising an energy-absorption beam (22) and a motor vehicle floor (12), the beam (22) being designed to operate in a predetermined direction (X) and presenting a cross-section that includes a projection (22a) in the predetermined direction, the assembly being **characterized in that**, when the assembly is mounted on the motor vehicle, the beam (22) is arranged in such a manner that its projection (22a) is suitable for moving under the floor (12) in the event of an impact.

2. An assembly according to claim 1, in which the projection (22a) of the beam (22) gives the beam (22) more than one-third of its second moment of area in the predetermined direction (X).

3. An assembly according to claim 1 or claim 2, in which the length of the projection (22a) of the beam (22) in the predetermined direction (X) is greater than the length of a second portion (22b) of the beam (22) in the predetermined direction (X).

4. An assembly according to any one of claims 1 to 3, in which the beam is arranged in such a manner as to leave a gap between the second portion (22b) of the beam and a vertical portion (23) connected to the floor (12).

5. An assembly according to any preceding claim, in which the beam is made solely out of plastics material.

6. An assembly according to any preceding claim, in which the beam presents an L-shaped cross-section.

7. An assembly according to any preceding claim, in which absorption is provided by an array of ribs (26) arranged on the beam (22).

8. An assembly according to any preceding claim, in which the beam is constituted by a plurality of fitted-together portions.

9. An assembly according to any preceding claim, in which local impact absorbers are incorporated in the beam (22) level with the side members of the vehicle when the beam (22) is mounted on the vehicle.

10. An assembly according to any preceding claim, designed to be arranged at the rear (10) of the vehicle.

## Patentansprüche

1. Baugruppe aus einem Träger (22) für die Aufnahme von Energie und einem Fahrzeugboden (12), wobei der Träger (22) dafür vorgesehen ist, entlang einer vorgegebenen Richtung (X) zu wirken und einen Querschnitt aufweist, der in der vorgegebenen Richtung eine Auskragung (22a) umfasst, **dadurch gekennzeichnet, dass** der Träger(22) derart angeordnet ist, dass seine Auskragung (22a) in der Lage ist, sich bei einem Stoß unter den Fahrzeugboden (12) zu schieben, wenn die Baugruppe an einem Auto angebracht wird.

2. Baugruppe nach Anspruch 1, wobei die Auskragung (22a) des Trägers (22) selbigem Träger (22) in Richtung (X) mehr als ein Drittel seiner Trägheit verleiht.

3. Baugruppe nach Ansprüchen 1 oder 2, wobei die Länge der Auskragung (22a) des Trägers (22) in der vorgegebenen Richtung (X) größer ist als die Länge eines zweiten Teiles (22b) des Trägers (22) in der vorgegebenen Richtung (X).

4. Baugruppe nach einem beliebigen der Ansprüche 1 bis 3, wobei der Träger so angeordnet ist, dass zwischen dem zweiten Teil (22b) des Trägers und einem vertikalen Teil (23), das mit dem Fahrzeugboden verbunden ist, ein Zwischenraum verbleibt.

5. Baugruppe nach einem beliebigen der vorhergehenden Ansprüche, bei welcher der Träger ausschließlich aus Kunststoff besteht.

6. Baugruppe nach einem beliebigen der vorhergehenden Ansprüche, wobei der Träger einen L-förmigen Querschnitt aufweist.

7. Baugruppe nach einem beliebigen der vorhergehenden Ansprüche, wobei die Energieaufnahme durch ein Netz von Rippen (26) bewerkstelligt wird, die auf dem Träger (22) angeordnet sind.

8. Baugruppe nach einem beliebigen der vorstehenden Ansprüche, wobei der Träger durch mehrere untereinander verbundene Teilstücke gebildet wird.

9. Baugruppe nach einem beliebigen der vorstehenden Ansprüche, wobei die lokalen Aufnehmer in den Träger (22) eingebaut werden, und zwar auf Höhe der Längsträger des Fahrzeuges, wenn der Träger (22) auf dem Fahrzeug montiert wird.

10. Baugruppe nach einem beliebigen der vorstehenden Ansprüche, die dafür vorgesehen ist, hinten (10) am Fahrzeug angeordnet zu werden.
